# EUROPÄISCHE PATENTSCHRIFT

(11) **EP 2 817 598 B1**
(45) Veröffentlichungstag und Bekanntmachung des Hinweises auf die Patenterteilung: **15.03.2017**
(21) Anmeldenummer: 13700612.8
(22) Anmeldetag: 09.01.2013
(51) Int. Cl.: G01K 7/02

(54) **TEMPERATURMESSGERÄT, TEMPERATURMESSGERÄT-SET UND VERFAHREN ZUR KONFIGURATION EINES MIT EINEM THERMOELEMENT BETREIBBAREN TEMPERATURMESSGERÄTS**
TEMPERATURE MEASURING DEVICE, TEMPERATURE MEASURING DEVICE SET AND METHOD FOR CONFIGURING A TEMPERATURE MEASURING DEVICE THAT CAN BE OPERATED WITH A THERMOCOUPLE
APPAREIL DE MESURE DE TEMPÉRATURE, KIT DE MESURE DE TEMPÉRATURE ET PROCÉDÉ DE CONFIGURATION D'UN APPAREIL DE MESURE DE TEMPÉRATURE POUVANT FONCTIONNER AVEC UN THERMOCOUPLE

(30) Priorität: 23.02.2012 DE 102012003614
(43) Veröffentlichungstag der Anmeldung: 31.12.2014
(73) Patentinhaber: Testo AG, 75853 Lenzkirch (DE)
(72) Erfinder: ÅKERVALL, Jens, S-427 38 Billdal (SE); ROMBACH, Martin, 79853 Lenzkirch (DE); SCHWÖRER, Wolfgang, 79843 Löffingen (DE)
(74) Vertreter: Börjes-Pestalozza, Henrich
(86) Internationale Anmeldenummer: PCT/EP2013/000035
(87) Internationale Veröffentlichungsnummer: WO 2013/124021

(56) Entgegenhaltungen:
- DE-U- 7 306 242
- JP-A- H10 199 822
- US-A1- 2010 286 842
- US-A1- 2011 299 567

## Beschreibung

Die Erfindung betrifft ein Temperaturmessgerät mit wenigstens zwei zur Aufnahme jeweils eines Kontaktelements eines Thermoelements eingerichteten Gegenkontaktelementen.

Die Erfindung betrifft weiter ein Temperaturmessgerät-Set mit einem Thermoelement, welches aus zwei unterschiedlichen, an einem Messpunkt des Thermoelements miteinander verbundenen Metallen gefertigt ist, wobei das Thermoelement wenigstens zwei eine Vergleichsstelle zur Temperaturmessung bildende Kontaktelemente aufweist, und mit einem Temperaturmessgerät zur Auswertung des Thermoelements.

Die Erfindung betrifft schließlich ein Verfahren zur Konfiguration eines mit einem Thermoelement betreibbaren Temperaturmessgeräts.

Derartige Temperaturmessgerät-Sets sind bekannt und dienen zur Temperaturmessung mit einem Thermoelement. Das Thermoelement wandelt hierbei eine Temperaturdifferenz zwischen einer Messstelle und einer Vergleichsstelle in ein elektrisches Spannungssignal zwischen den Kontaktelementen um.

Das Temperaturmessgerät erfasst diese elektrische Spannung und stellt hierzu einen Temperaturmesswert bereit.

Zur Abdeckung unterschiedlicher Temperaturmessbereiche ist es bekannt, verschiedene Materialkombinationen im Thermoelement zu verwenden.

Beispielsweise sind Thermoelemente vom Typ J, K, T bekannt, bei denen die Verbindungsleitungen zwischen der Messstelle und der Vergleichsstelle des Thermoelements aus jeweils unterschiedlichen Paarungen metallischer Werkstoffe gefertigt sind. An der Messstelle sind diese unterschiedlichen Materialien miteinander elektrisch leitend verbunden. Es sind auch weitere Thermoelement-Typen bekannt.

Um aus der generierten elektrischen Spannung einen zutreffenden Temperaturmesswert ermitteln zu können, ist in dem Temperaturmessgerät eine entsprechende Kennlinie hinterlegt. Hierbei ist für jede Materialkombination des Thermoelements, also für jeden Thermoelementtyp, eine spezifische Kennlinie hinterlegt, da jede Materialkombination in unterschiedlicher Weise die Temperaturdifferenz zwischen Messstelle und Vergleichsstelle in ein Spannungssignal umwandelt.

Es ist hierbei üblich, dass ein Benutzer eines Temperaturmessgerätes jeweils einstellt, mit welchem Thermoelementtyp die Temperaturmessung momentan durchgeführt wird.

Wird der falsche Thermoelementtyp eingestellt, so kann die an der Messstelle herrschende Temperatur nicht richtig gemessen werden.

Aus DE 73 06 242 U ist ein Thermoelement bekannt, bei welchem eine eindeutige Zuordnung eines Steckers am Thermoelement zu einer Büchse an einer Anschlussleitung vorhanden ist, wodurch es nicht mehr nötig ist, zum Beispiel mit Hilfe eines Magneten von Hand festzustellen, welche von zwei Leitungen aus magnetischem und welchem aus unmagnetischem Material besteht.

Aus US 2011/299567 A1 list ein Prozessvariablen-Übertrager mit Thermoelement-Polarisationserkennung bekannt, bei welchem eine Messschaltung zur Identifizierung eines Thermoelements-Typs durch wenigstens eine Spannungsmessung eingerichtet ist.

Aus JP HC 199822 A ist ein halbleitendes Wärmeeinwirkungsgerät bekannt, bei welchem ein Thermoelementtyp von einer Bedienperson eingegeben wird.

Aus US 2010/286842 A1 ist ein intelligentes Temperaturmessgerät bekannt, bei welchem eine eindeutige Identifikationsnummer eines Thermoelements in einem Nur-LeseSpeicher hinterlegt ist.

Der Erfindung liegt die Aufgabe zugrunde, die Bedieneigenschaften eines Temperaturmessgeräts zu verbessern.

Zur Lösung dieser Aufgabe sind bei einem Temperaturmessgerät der eingangs beschriebenen Art erfindungsgemäß die Merkmale von Anspruch 1 vorgesehen. Insbesondere wird somit vorgeschlagen, dass an wenigstens einem ersten Gegenkontaktelement der wenigstens zwei Gegenkontaktelemente ein erster Messsensor angeordnet ist, mit welchem eine magnetische Eigenschaft eines mit dem ersten Gegenkontaktelement steckverbundenen Kontaktelements detektierbar ist. Die Erfindung macht sich somit die Erkenntnis zunutze, dass die unterschiedlichen metallischen Werkstoffe, die in den unterschiedlichen Thermoelementtypen eingesetzt werden, unterschiedliche magnetische Eigenschaften aufweisen. Diese unterschiedlichen magnetischen Eigenschaften können mit dem ersten Messsensor detektiert werden, so dass der aktuell verwendete Thermoelementtyp erkennbar ist.

Bei einer Ausgestaltung der Erfindung kann vorgesehen sein, dass die Gegenkontaktelemente des Temperaturmessgeräts von einer Steckeraufnahme umfasst sind. Die Steckeraufnahme weist also in diesem Fall die wenigstens zwei oder genau zwei Gegenkontaktelemente auf. Hierbei kann vorgesehen sein, dass die Steckeraufnahme für einen passenden Anschlussstecker des Thermoelements eingerichtet und ausgeformt ist. Dieser Anschlussstecker kann die Kontaktelemente aufweisen, welche mit den Gegenkontaktelementen verbindbar und in Gebrauchsstellung verbunden sind. Von Vorteil ist dabei, dass Thermoelemente mit standardisierten Anschlusssteckern an dem erfindungsgemäßen Temperaturmessgerät verwendbar sind, indem die Steckeraufnahme an die Größe und/oder die Form und/oder die Anzahl der Kontaktelemente des Anschlusssteckers angepasst ist.

Um das erfindungsgemäße Temperaturmessgerät mit einem handelsüblichen Thermoeelement betreiben zu können, dessen Anschlussstecker als Kontaktelemente Steckerpins aufweist, können die Gegenkontaktelemente als Steckerbuchsen ausgebildet sein. Bei weiteren Ausgestaltungen können die Kontaktelemente als Steckerbuchsen und die Gegenkontaktelemente als passende Steckerpins ausgebildet sein.

Um die Vergleichsstelle des Thermoelements in das Temperaturmessgerät hinein verlagern zu können, können die Kontaktelemente aus denselben metallischen Materialien gefertigt sein, aus denen auch die Verbindungsleitungen des Thermoelements, welche die Schenkel des Thermoelements bilden, gefertigt sind. Jedes Kontaktelement kann somit Bestandteil eines Schenkels des Thermoelements sein.

Bei einer Ausgestaltung der Erfindung kann vorgesehen sein, dass an einem zweiten Gegenkontaktelement der wenigstens zwei Gegenkontaktelemente ein zweiter Messsensor angeordnet ist, mit welchem eine magnetische Eigenschaft eines in das zweite Gegenkontaktelement eingesteckten Kontaktelements detektierbar ist. Von Vorteil ist dabei, dass auf diese Weise eine noch größere Anzahl von Thermoelementtypen unterscheidbar ist, da magnetische Eigenschaften beider oder zweier Kontaktelemente des Thermoelements getrennt voneinander erfassbar und auswertbar sind.

Es kann vorgesehen sein, dass der erste Messsensor und/oder der zweite Messsensor von einer Ansteuerungseinheit auslesbar ist/sind, wobei die Ansteuerungseinheit eine Kennlinie oder eine spezifische Information des eingesteckten Thermoelements in Abhängigkeit von einem Ausgangssignal des ersten Messsensors und/oder des zweiten Messsensors bereitstellt. Von Vorteil ist dabei, dass eine automatische Konfiguration des Temperaturmessgeräts durchführbar ist, mit welcher das Temperaturmessgerät auf das eingesteckte Thermoelement abstimmbar ist. Die Konfiguration kann hierbei durch die Bereitstellung einer zu dem detektierten Thermoelementtyp passenden Kennlinie erfolgen, wobei mit der Kennlinie eine Ausgangsspannung des Thermoelements verarbeitbar ist. Zusätzliche Konfigurationsschritte sind so verzichtbar, und es wird eine typische Fehlerquelle, die in der falschen Auswahl einer Kennlinie zu einem eingesteckten Thermoelement besteht, bei der Verwendung eines Temperaturmessgeräts ausgeschlossen.

Bei einer Ausgestaltung der Erfindung kann vorgesehen sein, dass in einer Speichereinheit Kennlinien für wenigstens zwei unterschiedliche Typen von Thermoelementen hinterlegt sind. Von Vorteil ist dabei, dass das Messgerät mit verschiedenen Thermoelementen betreibbar ist.

Es kann vorgesehen sein, dass die in der Speichereinheit hinterlegten Kennlinien mit der Ansteuerungseinheit in Abhängigkeit von dem Ausgangssignal des ersten Messsensors und/oder des zweiten Messsensors auswählbar und/oder bereitstellbar sind. Von Vorteil ist dabei, dass die jeweils passende Kennlinie automatisiert bereitstellbar ist, wodurch Messfehler vermeidbar sind.

Die Kennlinien können hierbei als Kennlinientabelle oder als Parametersatz für eine parametrierte Kennlinie hinterlegt sein. Im zweiten Fall werden die Parameter in Abhängigkeit von dem Ausgangssignal des ersten und/oder des zweiten Messsensors festgelegt, während im ersten Fall die Tabellenwerte in Abhängigkeit von dem Ausgangssignal bereitgestellt werden.

Bei einer Ausgestaltung der Erfindung kann vorgesehen sein, dass an der oder einer Steckeraufnahme oder in räumlicher Nähe zu den Gegenkontaktelementen oder zwischen den Gegenkontaktelementen ein Temperatursensor angeordnet ist, welcher die Vergleichsstelle des Thermoelements definiert. Von Vorteil ist dabei, dass somit nicht nur die Temperaturdifferenz zwischen der Messstelle und der Vergleichsstelle messbar ist, sondern dass der absolute Temperaturwert an der Messstelle berechenbar ist, indem die Temperatur an der Vergleichsstelle gemessen und zu der Temperaturdifferenz addiert wird.

Bei einer Ausgestaltung der Erfindung kann vorgesehen sein, dass der erste Messsensor zur Detektierung einer ferromagnetischen Eigenschaft eingerichtet ist. Es kann auch vorgesehen sein, dass der zweite Messsensor zur Detektierung einer ferromagnetischen Eigenschaft eingerichtet ist. Bevorzugt sind beide Messsensoren zur Detektierung jeweils derselben ferromagnetischen Eigenschaften eingerichtet. Hierbei kann die Detektierung dadurch erfolgen, dass das Über- oder Unterschreiten eines Schwellwertes für eine magnetische Materialgröße erfasst wird. Eine Detektion kann auch in Messung der magnetischen Materialgröße bestehen.

Beispielsweise können die Messsensoren mit der Ansteuerungseinheit derart zusammenwirken, dass erkennbar ist, ob ein eingestecktes Kontaktelement ferromagnetisch ist oder nicht.

Ist jedes Gegenkontaktelement mit einem Messsensor ausgerüstet, so können auf diese Weise Entscheidungstabellen gebildet werden, wobei die unterschiedlichen Thermoelementtypen in unterschiedliche Felder der Tabelle fallen.

Beispielsweise kann vorgesehen sein, dass die Ansteuerungseinheit zur Auswahl einer Kennlinie eines Thermoelements vom Typ T eingerichtet ist, wenn beide Kontaktelemente des eingesteckten Anschlusssteckers nicht ferromagnetisch sind.

Zur Detektierung der ferromagnetischen Eigenschaften kann vorgesehen sein, dass der erste Messsensor und/oder der zweite Messsensor als Magnetfeldsensor eingerichtet sind. Bevorzugt ist hierbei vorgesehen, dass die Magnetfeldsensoren vorgespannt sind. Hierbei bedeutet vorgespannt, dass im Bereich des Messsensors ein Magnetfeld erzeugt wird, welches durch die Anwesenheit von ferromagnetischen Materialien im Kontaktelement verstärkt oder vermindert wird.

Beispielsweise kann diese Vorspannung durch Permanentmagneten erzeugt werden, es ist jedoch auch eine Erzeugung eines elektromagnetischen Feldes verwendbar.

Bei einer Ausgestaltung der Erfindung kann vorgesehen sein, dass an der oder einer Steckeraufnahme ein Mittel zum orientierungsrichtigen Anschluss des oder eines Anschlusssteckers des Thermoelements ausgebildet ist. Von Vorteil ist dabei, dass auf diese Weise die Kontaktelemente des Anschlusssteckers unterscheidbar sind, so dass der Fall, dass ein Kontaktelement ferromagnetisch und das andere nicht ferromagnetisch ist, unterscheidbar ist von dem entgegengesetzten Fall, dass das eine Kontaktelement nicht ferromagnetisch ist, während das andere Kontaktelement ferromagnetisch ist.

Mit den Mitteln zum orientierungsrichtigen Anschluss des Anschlusssteckers kann somit auf einfache Weise erreicht werden, dass ein Minus-Schenkel des Thermoelements nur mit einem bestimmten Gegenkontaktelement, beispielsweise einem ersten Gegenkontaktelement, verbindbar ist, während der Plus-Schenkel mit nur dem anderen Gegenkontaktelement, beispielsweise dem zweiten Gegenkontaktelement, verbindbar ist. Hierdurch ist eine noch größere Zahl unterschiedlicher Thermoelementtypen unterscheidbar.

Somit kann die Ansteuerungseinheit so eingerichtet sein, dass eine Kennlinie eines Thermoelements vom Typ J ausgewählt wird, wenn zumindest der Plus-Schenkel oder nur der Plus-Schenkel des eingesteckten Thermoelements ferromagnetisch ist. Alternativ oder zusätzlich kann die Ansteuerungseinheit zur Auswahl einer Kennlinie eines Thermoelements vom Typ K eingerichtet sein, wenn zumindest der Minus-Schenkel oder nur der Minus-Schenkel eines eingesteckten Thermoelements ferromagnetisch ist.

Das Mittel zum orientierungsrichtigen Anschluss kann beispielsweise dadurch ausgebildet sein, dass die Kontaktelemente und somit die Gegenkontaktelemente unterschiedliche Formen oder Größen oder Anordnungen aufweisen oder dass der Anschlussstecker und die Steckeraufnahme aufeinander abgestimmte geometrische Formen aufweisen, die eine Steckverbindung nur in einer Orientierung zulassen.

Zur Lösung dieser Aufgabe ist bei einem Temperaturmessgerät-Set der eingangs beschriebenen Art vorgesehen, dass das Temperaturmessgerät erfindungsgemäß, wie beschrieben, ausgebildet ist. Somit ist ein einfach handhabbares Temperaturmessgerät-Set bereitgestellt, bei welchem eine manuelle, fehleranfällige Einstellung des richtigen Thermoelementtyps verzichtbar ist, da die Einstellung automatisiert durchführbar ist.

Besonders praktisch ist es, wenn das Temperaturmessgerät-Set mehrere Thermoelemente von unterschiedlichen Thermoelement-Typen enthält. Auf diese Weise können mit dem Temperaturmessgerät-Set große Temperaturmessbereiche abgedeckt werden, und es sind mit der Erfindung Fehlmessungen aufgrund einer fehlerhaft eingestellten Kennlinie vermeidbar.

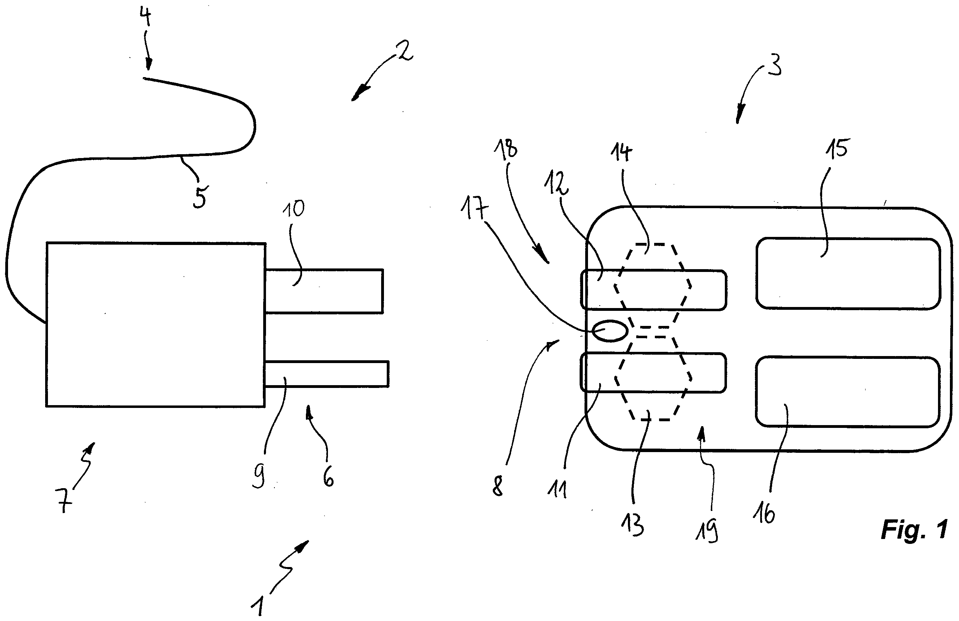

Zur Lösung dieser Aufgabe ist bei einem Verfahren der eingangs genannten Art erfindungsgemäß vorgesehen, dass nach einem Anschluss des Thermoelements an das Temperaturmessgerät eine magnetische Eigenschaft eines Kontaktelements des Thermoelements geprüft oder gemessen wird und dass in Abhängigkeit von einem Ergebnis der Prüfung oder Messung der magnetischen Eigenschaft eine spezifische Information oder eine Kennlinie des angeschlossenen Thermoelements automatisch bereitgestellt wird, insbesondere für eine Auswertung oder Verarbeitung eines Ausgangssignals des Thermoelements. Von Vorteil ist dabei, dass manuelle Konfigurationsschritte verzichtbar sind, so dass Fehlmessungen und fehlerhafte manuelle Einstellungen vermeidbar sind. Bevorzugt wird geprüft oder gemessen, ob das Material des Kontaktelements oder der Kontaktelemente ferromagnetisch ist.
Besonders günstig ist es, wenn für jedes Kontaktelement des Thermoelements getrennt die oder eine magnetische Eigenschaft geprüft oder gemessen wird. Von Vorteil ist dabei, dass mit einer Entscheidungsmatrix, in welcher die Kontaktelemente und die möglichen magnetischen Eigenschaften eingetragen sind, ermittelbar ist, welcher Thermoelementtyp aktuell mit dem Temperaturmessgerät verbunden ist.
Die spezifische Information kann beispielsweise in der Anzeige des detektierten Thermoelementtyps bestehen. Besonders günstig ist jedoch eine Bereitstellung einer Kennlinie des angeschlossenen Thermoelements, um die Konfiguration weitestgehend zu automatisieren. Die Kennlinie ist somit zur Auswertung der von dem Thermoelement generierten, temperaturabhängigen Spannung bereitgestellt und auswertbar.
Die Erfindung wird nun anhand einer Ausführungsbeispiels näher beschrieben, ist aber nicht auf dieses Ausführungsbeispiel beschränkt.
Es zeigt die einzige
Fig. 1 ein erfindungsgemäßes Temperaturmessgerät-Set in stark schematisierter Darstellung zur Erläuterung des Erfindungsprinzips.
Fig. 1 zeigt ein im Ganzen mit 1 bezeichnetes Temperaturmessgerät-Set in stark vereinfachter Darstellung, in welcher nur die zur Erläuterung der Erfindung beschriebenen Komponenten gezeigt sind.

Das Temperaturmessgerät-Set 1 hat wenigstens ein Thermoelement 2 und ein Temperaturmessgerät 3.

Das Thermoelement 2 ist hierbei in bekannter Weise ausgebildet, um eine Temperaturdifferenz zwischen einer Messstelle 4 am freien Ende einer Messleitung 5 und einer Vergleichsstelle 6 in ein elektrisches Spannungssignal umzuwandeln.

Hierzu weist die Messleitung 5 zwei Adern auf, die aus unterschiedlichen metallischen Materialien gefertigt und an der Messstelle 4 miteinander leitend verbunden sind.

Das Thermoelement 2 weist an dem der Messstelle 4 gegenüberliegenden Ende der Messleitung 5 einen Anschlussstecker 7 auf, mit welchem das Thermoelement 2 an das Temperaturmessgerät 3 anschließbar und somit elektrisch leitend und lösbar verbindbar ist.

Der Anschlussstecker 7 ist hierbei in eine Steckeraufnahme 8 des Temperaturmessgeräts 3 steckbar.

Der Anschlussstecker 7 weist zwei Kontaktelemente 9, 10 auf, welche in passende Gegenkontaktelemente 11, 12 der Steckeraufnahme 9 zur elektrischen Verbindung einsteckbar sind.

Im Ausführungsbeispiel ist der Anschlussstecker 7 in für Thermoelemente 2 handelsüblicher Weise ausgebildet.

Die Kontaktelemente 9, 10 sind somit als Steckerpins ausgebildet. Die Gegenkontaktelemente 11, 12 sind hierzu passend als Steckerbuchsen ausgebildet.

Bei weiteren Ausführungsbeispielen können andere Steckerformen realisiert sein, beispielsweise können die Kontaktelemente 9, 10 als Steckerbuchsen und die Gegenkontaktelemente 11, 12 als passende Steckerpins ausgebildet sein. Der Anschlussstecker 7 kann auch nicht, wie gezeigt, einstückig, sondern mehrteilig sein, wobei die Kontaktelemente 9 und 10 voneinander trennbar sein können. Auch die Steckeraufnahme kann ein- oder mehrteilig sein. Bevorzugt ist jedoch die hier dargestellte Variante mit einem einteiligen Anschlussstecker 7 und einer einteiligen Steckeraufnahme 8 gemäß Fig. 1.

Das Temperaturmessgerät-Set 1 kann weitere Thermoelemente 2 umfassen, welche an dasselbe Temperaturmessgerät 3 anschließbar sind. Das Thermoelement 2 ist somit gegen ein weiteres Thermoelement von einem anderen Thermoelementtyp austauschbar.

Die Kontaktelemente 9, 10 sind aus demselben metallischen Werkstoff gefertigt wie diejenige Ader der Messleitung 5, die mit dem jeweiligen Kontaktelement 9, 10 direkt elektrisch verbunden ist.

Auf diese Weise bilden die Kontaktelemente 9, 10 die Vergleichsstelle 6 für die Temperaturmessung mit dem Thermoelement 2. Denn so wird erreicht, dass die Temperaturdifferenz zwischen der Messstelle 4 und der Vergleichsstelle 6 aufgrund der unterschiedlichen metallischen Materialien der Adern der Messleitung 5 eine Spannungsdifferenz zwischen dem Kontaktelement 9 und dem Kontaktelement 10 bewirkt.

Die Adern der Messleitung 5 mit den Kontaktelementen 9, 10 werden auch als die beiden Schenkel des Thermoelements 2 bezeichnet. Beispielsweise bildet das Kontaktelement 9 mit der zugehörigen Ader den Plus-Schenkel, während das Kontaktelement 10 mit der zugehörigen Ader den Minus-Schenkel darstellt.

An einem ersten Gegenkontaktelement 11 der zwei Gegenkontaktelemente 11, 12 ist ein erster Messsensor 13 angeordnet, mit welchem eine magnetische Eigenschaft eines in das erste Gegenkontaktelement 11 eingesteckten Kontaktelements 9 detektierbar ist.

Auf diese Weise ist mit dem Messsensor 13 beispielsweise feststellbar, ob das Metall des Kontaktelements 9 ferromagnetisch ist oder nicht.

An dem zweiten Gegenkontaktelement 12 der zwei Gegenkontaktelemente 11, 12 ist ein zweiter Messsensor 14 angeordnet, mit welchem eine magnetische Eigenschaft eines in das zweite Gegenkontaktelement 12 eingesteckten Kontaktelements 9 detektierbar ist.

Im Ausführungsbeispiel arbeiten die Messsensoren 13, 14 nach einem identischen Messprinzip. Bei weiteren Ausführungsbeispielen können die Messsensoren 13, 14 nach unterschiedlichen physikalischen Messprinzipien arbeiten.

Die Messsensoren 13, 14 der Fig. 1 sind jeweils zur Detektierung einer ferromagnetischen Eigenschaft eingerichtet. Dies wird hier dadurch erreicht, dass die Messsensoren 13, 14 jeweils als Magnetfeldsensor ausgebildet sind.

Dieser Magnetfeldsensor, beispielsweise ein Hall-Sensor, kann vorgespannt sein, indem durch ein permanent-magnetisches Material oder elektromagnetisch ein Magnetfeld erzeugt wird, welches sich ändert, sobald ein Kontaktelement 9, 10 aus einem ferromagnetischen Metall mit dem jeweiligen Gegenkontaktelement 11, 12 verbunden wird.

In dem Temperaturmessgerät 3 ist eine Ansteuerungseinheit 15 ausgebildet, welche den ersten Messsensor 13 und gegebenenfalls den zweiten Messsensor 14 ausliest, indem das Ausgangssignal des ersten Messsensors 13 und/oder des zweiten Messsensors 14 erfasst wird.

Die Ansteuerungseinheit 15 greift auf eine Speichereinheit 16 des Temperaturmessgeräts 3 zu, in welcher Kennlinien für unterschiedliche Typen von Thermoelementen 2 hinterlegt sind.

Diese Kennlinien können als Wertetabellen oder als Parametersätze für eine formelhaft hinterlegte, parameterabhängige Kennlinie hinterlegt sein.

Das Temperaturmessgerät 3 ist in diesbezüglich an sich bekannter Weise dazu eingerichtet, mit Hilfe der jeweils zu dem Thermoelement 2 passenden Kennlinie die zwischen den Kontaktelementen 9 und 10 bestehende temperaturabhängige, elektrische Spannung zu erfassen und in einen Temperaturwert umzuwandeln. Dieser Temperaturwert entspricht der Temperatur an der Messstelle 4 oder der Temperaturdifferenz zwischen der Messstelle 4 und der Vergleichsstelle 6.

Die Ansteuerungseinheit 15 ist nun bei der Erfindung zusätzlich so eingerichtet, dass das Ausgangssignal des ersten Messsensors 13 und/oder des zweiten Messsensors 14 die Auswahl einer in der Speichereinheit 16 hinterlegten Kennlinie zur Berechnung oder Ermittlung des erwähnten Temperaturwertes bewirkt/bewirken.

Dies kann beispielsweise dadurch erreicht sein, dass der Ansteuerungseinheit Schwellwerte für das Ausgangssignal des ersten Messsensors 13 und/oder des zweiten Messsensors 14 vorgegeben sind, bei deren Überschreiten oder Unterschreiten von der Ansteuerungseinheit erkannt wird, ob ein Kontaktelement 9, 10 ferromagnetisch ist oder nicht.

Der Ansteuerungseinheit 15 ist hierbei eine Entscheidungsmatrix der Dimension 2 x 2 vorgegeben, deren Zeilen den einzelnen Messsensoren 13, 14 und deren Spalten der Anwesenheit eines ferromagnetischen Metalls und der Abwesenheit eines ferromagnetischen Metalls des jeweiligen Kontaktelements 9, 10 am Messsensor 13, 14 zugeordnet sind. Zeilen und Spalten können bei weiteren Ausführungsbeispielen vertauscht oder anderweitig angeordnet sein.

In den Feldern der Entscheidungsmatrix sind die unterschiedlichen Thermoelementtypen und deren Kennlinien oder weitere, für die Thermoelementtypen jeweils spezifische Informationen eingetragen. Es kann auch jeweils ein Adressverweis oder ein Link auf eine Kennlinie oder einen Parametersatz eingetragen sein.

Das Temperaturmessgerät 3 weist weiter einen Temperatursensor 17 auf. Der Temperatursensor 17 ist zwischen den Gegenkontaktelementen 11, 12 an der Steckeraufnahme 8 angeordnet, um die Absoluttemperatur an der Vergleichsstelle 6 messen zu können, wenn der Anschlussstecker 7 in die Steckeraufnahme 8 gesteckt ist.

Auf diese Weise kann das Messsignal des Temperatursensors 17 verwendet werden, um die Temperaturdifferenz zwischen der Messstelle 4 und der Vergleichsstelle 6 in eine Absoluttemperatur an der Messstelle 4 umzurechnen. Hierzu wird die Summe der Temperaturdifferenz über dem Thermoelement 2 und des Temperaturwerts am Temperatursensor 17 gebildet und ausgegeben.

An der Steckeraufnahme 8 ist ein Mittel 18 zum orientierungsrichtigen Anschluss des Anschlusssteckers 7 ausgebildet.

Beispielsweise kann dieses Mittel 18 durch eine Formgebung der Steckeraufnahme 8 eingerichtet sein, welche zu einer Formgebung des Anschlusssteckers 7 derart passt, dass der Anschlussstecker 7 nur in einer vorgegebenen Orientierung in die Steckeraufnahme 8 einsteckbar ist.

In Fig. 1 ist angedeutet, dass die Kontaktelemente 9, 10 unterschiedliche Abmessungen, beispielsweise unterschiedliche Durchmesser der Steckerpins und/oder unterschiedliche Länge der Steckerpins, aufweisen können. Dies kann für einen zwangsweise orientierungsrichtigen Anschluss derart genutzt werden, dass die Gegenkontaktelemente 11, 12 jeweils passend zu nur einem der Kontaktelemente 9, 10 ausgebildet sind.

Auf diese Weise sind die Kontaktelemente 9, 10 im Temperaturmessgerät 3 unterscheidbar.

Somit sind der sogenannte Plus-Schenkel und der sogenannte Minus-Schenkel des Thermoelements 2 unterscheidbar. Beispielsweise kann der Plus-Schenkel des Thermoelements 2 dem ersten Kontaktelement 9 zugeordnet sein. Der Minus-Schenkel des Thermoelements 2 ist dann dem Kontaktelement 10 zugeordnet.

Es ist bekannt, dass bei Thermoelementen 2 vom Typ K der Plus-Schenkel eine NiCr-Legierung aufweist, während der Minus-Schenkel aus Nickel gefertigt ist. Hierbei ist die NiCr-Legierung nicht ferromagnetisch, während Nickel ferromagnetisch ist.

Es ist weiter bekannt, dass ein Thermoelement 2 vom Typ J einen Plus-Schenkel aus Fe und einen Minus-Schenkel aus einer CuNi-Legierung aufweist. Hierbei ist Eisen ferromagnetisch, während die CuNi-Legierung nicht ferromagnetisch ist.

Es ist schließlich bekannt, dass ein Thermoelement 2 vom Typ T einen Plus-Schenkel aus Kupfer und einen Minus-Schenkel aus einer CuNi-Legierung aufweist. Hierbei sind Kupfer und die CuNi-Legierung jeweils nicht ferromagnetisch.

Die erwähnte Entscheidungsmatrix sieht daher in diesem Fall so aus, dass die Ansteuerungseinheit 15 den Thermoelementtyp T anzeigt oder ausgibt oder dessen Kennlinie auswählt beziehungsweise konfiguriert, wenn am Plus-Schenkel, also am Messsensor 13, und am Minus-Schenkel, also am Messsensor 14, kein Ferromagnetismus detektiert wird.

Dieser Fall ist auch mit einem einzigen Messsensor 13, welcher die magnetische Eigenschaft an dem Gegenkontaktelement 11 und an dem Gegenkontaktelement 12 detektiert, erkennbar.

Die Entscheidungsmatrix kann ferner so vorgegeben sein, dass ein Thermoelementtyp J angezeigt oder ausgegeben oder dessen Kennlinie ausgewählt beziehungsweise bereitgestellt wird, wenn am Plus-Schenkel, also am ersten Messsensor 13, Ferromagnetismus detektiert wird, während am Minus-Schenkel, also am zweiten Messsensor 14 kein Ferromagnetismus detektiert wird.

Die Entscheidungsmatrix ist ferner so eingerichtet, dass ein Thermoelementtyp K angezeigt oder ausgegeben oder dass dessen Kennlinie ausgewählt oder bereitgestellt wird, wenn am Plus-Schenkel, also am ersten Messsensor 13 kein Ferromagnetismus detektiert wird und am Minus-Schenkel, also am zweiten Messsensor 14, Ferromagnetismus detektiert wird.

Hierbei können die Gegenkontaktelemente 11, 12 aus nicht ferromagnetischen und/oder aus identischen Materialien gefertigt sein.

Bei weiteren Ausführungsbeispielen kann die Entscheidungsmatrix eine andere Zahl von Spalten, beispielsweise eine Spalte oder mehr als zwei Spalten, aufweisen. Beispielsweise kann hierzu mit den Messsensoren 13, 14 eine magnetische Stoffgröße, beispielsweise die magnetische Suszeptibilität und/oder die magnetische Permeabilität, als magnetische Eigenschaft gemessen werden. Der Wertebereich der magnetischen Stoffgröße kann in eine Anzahl von Unterbereichen unterteilt werden, die den einzelnen Spalten der Entscheidungsmatrix zugeordnet sind.

Auf diese Weise können sogar unterschiedliche ferromagnetische Materialien für unterschiedliche Thermoelemente 2 unterscheidbar sein.

Es sei noch erwähnt, dass an der Steckeraufnahme 8 ein nicht weiter dargestelltes Mittel 19 zur Detektion eines einesteckten Anschlusssteckers 7 ausgebildet sein kann.

Auf diese Weise ist der Fall, dass kein Thermoelement 2 eingesteckt ist, von dem Fall, dass ein Thermoelement 2 eingesteckt ist, dessen Kontaktelemente 9, 10 beide nicht ferromagnetisch sind, unterscheidbar.

Mit dem beschriebenen Temperaturmessgerät 3 ist somit ein Verfahren zur Konfiguration des Temperaturmessgeräts 3 ausführbar, bei welchem ein Thermoelement 2 an das Temperaturmessgerät 3 angeschlossen wird. Das Temperaturmessgerät 3 prüft, ob die Kontaktelemente 9, 10 des Anschlusssteckers 7 eine vorgegebene magnetische Eigenschaft aufweisen. Dies erfolgt durch direkte oder indirekte Messung einer magnetischen Stoffeigenschaft des jeweiligen Kontaktelements 9, 10 mittels einem jeweils zugeordneten Messsensor 13, 14.

Im Ausführungsbeispiel wird dies dadurch gemessen, dass die Änderung eines an dem jeweiligen Messsensor 13, 14 erzeugten Magnetfeldes gemessen oder detektiert wird, welche durch die Anwesenheit oder das Steckverbinden des jeweiligen Kontaktelements 9, 10 an dem zugehörigen Gegenkontaktelement 11, 12 bewirkt wird.

Im Ausführungsbeispiel erfolgt die Detektion dadurch, dass das Überschreiten oder Unterschreiten eines vorgegebenen Schwellwertes für das Ausgangssignal des jeweiligen Messsensors 13, 14 erfasst und ausgewertet wird.

Das erfindungsgemäße Verfahren mit dem Temperaturmessgerät 3 sieht sodann vor, dass in Abhängigkeit von dem Ergebnis der Prüfung oder Messung der magnetischen Eigenschaft eine spezifische Information oder eine Kennlinie des angeschlossenen Thermoelements 2 automatisch bereitgestellt wird. Die Kennlinie ist bei der Berechnung oder Ermittlung eines Temperaturmesswertes für die Messstelle 4 verwendbar.

Diese Auswahl und Bereitstellung kann beispielsweise - wie erläutert - mit Hilfe einer Entscheidungsmatrix eingerichtet sein.

Hierdurch ist das Temperaturmessgerät-Set 1 und insbesondere das Temperaturmessgerät 3 zum Betrieb mit dem Thermoelement 2 konfiguriert.

Bei dem Temperaturmessgerät-Set 1 mit wenigstens einem Thermoelement 2 und einem mit dem Thermoelement 2 zur Temperaturmessung verbindbaren Temperaturmessgerät 3 wird vorgeschlagen, an wenigstens einem, zu einem Kontaktelement 9, 10 des Thermoelements 2 passenden Gegenkontaktelement 11, 12 einen Messsensor 13, 14 zur Messung oder Detektion einer magnetischen Eigenschaft anzuordnen, um in Abhängigkeit von einem Ausgangssignal des Messsensors 13, 14 eine spezifische Information oder eine Kennlinie des angeschlossenen Thermoelements 2 automatisch auszuwählen und/oder bereitzustellen.

## Patentansprüche

1. Temperaturmessgerät (3) mit wenigstens zwei zur Aufnahme jeweils eines Kontaktelements (9, 10) eines Thermoelements (2) eingerichteten Gegenkontaktelementen (11, 12 und einer Ansteuerungseinheit (15), **dadurch gekennzeichnet, dass** an wenigstens einem ersten Gegenkontaktelemente (11, 12) der wenigstens zwei Gegenkontaktelemente (11, 12) ein erster Messsensor (13, 14) angeordnet ist, mit welchem eine magnetische Eigenschaft eines mit dem ersten Gegenkontaktelement (11, 12) steckverbundenen Kontaktelements (9, 10) detektierbar ist, und der erste Messsensor (13, 14) von der Ansteuerungseinheit (15) auslesbar ist, wobei die Ansteuerungseinheit (15) derart ausgerichtet ist, dass sie eine Kennlinie oder eine spezifische Information des eingesteckten Thermoelements (2) in Abhängigkeit von einem Ausgangssignal des ersten Messsensors (13, 14) bereitstellen kann.

2. Temperaturmessgerät (3) nach Anspruch 1, **dadurch gekennzeichnet, dass** an einem zweiten Gegenkontaktelement (11, 12) der wenigstens zwei Gegenkontaktelemente (11, 12) ein zweiter Messsensor (13, 14) angeordnet ist, mit welchem eine magnetische Eigenschaft eines in das zweite Gegenkontaktelement (11, 12) eingesteckten Kontaktelements (9, 10) detektierbar ist.

3. Temperaturmessgerät (3) nach Anspruch 2, **dadurch gekennzeichnet, dass** der zweite Messsensor (13, 14) von der Ansteuerungseinheit (15) auslesbar ist, wobei die Ansteuerungseinheit (15) eine Kennlinie oder eine spezifische Information des eingesteckten Thermoelements (2) in Abhängigkeit von einem Ausgangssignal des ersten Messsensors (13, 14) und des zweiten Messsensors (13, 14) bereitstellt.

4. Temperaturmessgerät (3) nach einem der Ansprüche 1 bis 3, **dadurch gekennzeichnet, dass** in einer Speichereinheit (16) Kennlinien für wenigstens zwei unterschiedliche Typen von Thermoelementen (2) hinterlegt sind und/oder dass die in der Speichereinheit (16) hinterlegten Kennlinien mit der Ansteuerungseinheit (15) in Abhängigkeit von dem Ausgangssignal des ersten Messsensors (13, 14) und/oder des zweiten Messsensors (13, 14) auswählbar und/oder bereitstellbar sind.

5. Temperaturmessgerät (3) nach einem der Ansprüche 1 bis 4, **dadurch gekennzeichnet, dass** an der oder einer Steckeraufnahme (8) oder in räumlicher Nähe zu oder zwischen den Gegenkontaktelementen (11, 12) ein Temperatursensor (17) angeordnet ist, welcher eine Vergleichsstelle (6) des Thermoelements (2) definiert.

6. Temperaturmessgerät (3) nach einem der Ansprüche 1 bis 5, **dadurch gekennzeichnet, dass** der erste Messsensor (13, 14) und/oder der zweite Messsensor (13, 14) zur Detektierung einer ferromagnetischen Eigenschaft eingerichtet ist/sind.

7. Temperaturmessgerät (3) nach einem der Ansprüche 1 bis 6, **dadurch gekennzeichnet, dass** der erste Messsensor (13, 14) und/oder der zweite Messsensor (13, 14) als vorzugsweise vorgespannter Magnetfeldsensor eingerichtet ist.

8. Temperaturmessgerät (3) nach einem der Ansprüche 1 bis 7, **dadurch gekennzeichnet, dass** an der oder einer Steckeraufnahme (8) ein Mittel (19) zum orientierungsrichtigen Anschluss des oder eines Anschlusssteckers (7) des Thermoelements (2) ausgebildet ist.

9. Temperaturmessgerät-Set (1) mit wenigstens einem Thermoelement (2), welches aus zwei unterschiedlichen, an einer Messstelle (4) des Thermoelements (2) miteinander verbundenen Metallen gefertigt ist, wobei das Thermoelement (2) wenigstens zwei eine Vergleichsstelle (6) zur Temperaturmessung bildende Kontaktelemente (9, 10) aufweist, und mit einem Temperaturmessgerät (3) zur Auswertung des Thermoelements (2), **dadurch gekennzeichnet, dass** das Temperaturmessgerät (3) nach einem der vorangegangen Ansprüche ausgebildet ist.

10. Verfahren zur Konfiguration eines mit einem Thermoelement (2) betreibbaren Temperaturmessgeräts (3), **dadurch gekennzeichnet, dass** nach einem Anschluss des Thermoelements (2) an das Temperaturmessgerät (3) eine magnetische Eigenschaft eines Kontaktelementes (9, 10) des Thermoelements (2) geprüft oder gemessen wird und dass in Abhängigkeit von einem Ergebnis der Prüfung oder Messung der magnetischen Eigenschaft eine spezifische Information und/oder eine Kennlinie des angeschlossenen Thermoelements (2) automatisch bereitgestellt wird.

## Claims

1. Temperature measuring device (3) comprising at least two mating contact elements (11, 12), which are configured to receive in each case one contact element (9, 10) of a thermocouple (2), and a drive unit (15), **characterised in that** a first measurement sensor (13, 14) is arranged on at least one first mating contact element (11, 12) of the at least two mating contact elements (11, 12), a magnetic property of a contact element (9, 10), which is plug-connected to the first mating contact element (11, 12), being detectable by means of said first measurement sensor, and the first measurement sensor (13, 14) can be read out by a drive unit (15), wherein the drive unit (15) is configured such that it can provide a characteristic curve or a specific item of information about the plugged-in thermocouple (2) in dependence upon an output signal from the first measurement sensor (13, 14).

2. Temperature measuring device (3) as claimed in claim 1, **characterised in that** a second measuring sensor (13, 14) is arranged on a second mating contact element (11, 12) of the at least two mating contact elements (11, 12), a magnetic property of a contact element (9, 10), which is plugged into the second mating contact element (11, 12), being detectable by means of said second measurement sensor.

3. Temperature measuring device (3) as claimed in claim 2, **characterised in that** the second measurement sensor (13, 14) can be read out by the drive unit (15), wherein the drive unit (15) provides a characteristic curve or a specific item of information about the plugged-in thermocouple (2) in dependence upon an output signal from the first measurement sensor (13, 14) and from the second measurement sensor (13, 14).

4. Temperature measuring device (3) as claimed in any one of claims 1 to 3, **characterised in that** characteristic curves for at least two different types of thermocouple (2) are stored in a memory unit (16) and/or **in that** the characteristic curves stored in the memory unit (16) can be selected and/or provided by the drive unit (15) in dependence upon the output signal from the first measurement sensor (13, 14) and/or from the second measurement sensor (13, 14).

5. Temperature measuring device (3) as claimed in any one of claims 1 to 4, **characterised in that** a temperature sensor (17) is arranged on the or a plug receptacle (8) or in spatial proximity to or between the mating contact elements (11, 12), said temperature sensor defining a comparison point (6) of the thermocouple (2).

6. Temperature measuring device (3) as claimed in any one of claims 1 to 5, **characterised in that** the first measurement sensor (13, 14) and/or the second measurement sensor (13, 14) is/are configured to detect a ferromagnetic property.

7. Temperature measuring device (3) as claimed in any one of claims 1 to 6, **characterised in that** the first measurement sensor (13, 14) and/or the second measurement sensor (13, 14) are configured as a preferably biased magnetic field sensor.

8. Temperature measuring device (3) as claimed in any one of claims 1 to 7, **characterised in that** a means (19) for connecting the or a connection plug (7) of the thermocouple (2) with a correct orientation is formed on the or a plug receptacle (8).

9. Temperature measuring device set (1) comprising at least one thermocouple (2) which is produced from two different metals which are connected to one another at a measurement point (4) of the thermocouple (2), wherein the thermocouple (2) has at least two contact elements (9, 10), which form a comparison point (6) for temperature measurement, and comprising a temperature measuring device (3) for evaluating the thermocouple (2), **characterised in that** the temperature measuring device (3) is formed according to any one of the preceding claims.

10. Method for configuring a temperature measuring device (3) which can be operated with a thermocouple (2), **characterised in that** after connecting the thermocouple (2) to the temperature measuring device (3), a magnetic property of a contact element (9, 10) of the thermocouple (2) is examined or measured, and **in that** in dependence upon a result of the examination or measurement of the magnetic property, a specific item of information and/or a characteristic curve of the connected thermocouple (2) is automatically provided.

## Revendications

1. Appareil de mesure de température (3) avec au moins deux éléments de contact opposés (11, 12) conçus pour recevoir respectivement un élément de contact (9, 10) d'un thermocouple (2) et avec une unité de commande (15), **caractérisé en ce qu'**un premier capteur de mesure (13, 14) est disposé sur au moins un premier élément de contact opposé (11, 12) desdits au moins deux éléments de contact opposés (11, 12), avec lequel une propriété magnétique d'un élément de contact (9, 10) engagé avec le premier élément de contact opposé (11, 12) peut être détectée, et le premier capteur de mesure (13, 14) est lisible par l'unité de commande (15), dans lequel l'unité de commande (15) est orientée de telle manière qu'elle puisse fournir une courbe caractéristique ou une information spécifique du thermocouple engagé (2) en fonction d'un signal de sortie du premier capteur de mesure (13, 14).

2. Appareil de mesure de température (3) selon la revendication 1, **caractérisé en ce qu'**un deuxième capteur de mesure (13, 14) est disposé sur un deuxième élément de contact opposé (11, 12) desdits au moins deux éléments de contact opposés (11, 12), avec lequel une propriété magnétique d'un élément de contact (9, 10) engagé dans le deuxième élément de contact opposé (11, 12) peut être détectée.

3. Appareil de mesure de température (3) selon la revendication 2, **caractérisé en ce que** le deuxième capteur de mesure (13, 14) est lisible par l'unité de commande (15), dans lequel l'unité de commande (15) fournit une courbe caractéristique ou une information spécifique du thermocouple engagé (2) en fonction d'un signal de sortie du premier capteur de mesure (13, 14) et du deuxième capteur de mesure (13, 14).

4. Appareil de mesure de température (3) selon l'une quelconque des revendications 1 à 3, **caractérisé en ce que** des courbes caractéristiques pour au moins deux types différents de thermocouples (2) sont stockées dans une unité de mémoire (16) et/ou **en ce que** les courbes caractéristiques stockées dans l'unité de mémoire (16) peuvent être sélectionnées et/ou fournies avec l'unité de commande (15) en fonction du signal de sortie du premier capteur de mesure (13, 14) et/ou du deuxième capteur de mesure (13, 14).

5. Appareil de mesure de température (3) selon l'une quelconque des revendications 1 à 4, **caractérisé en ce qu'**un capteur de température (17), qui définit un point de comparaison (6) du thermocouple (2), est disposé sur le ou un logement de connecteur (8) ou à proximité spatiale des ou entre les éléments de contact opposés (11, 12).

6. Appareil de mesure de température (3) selon l'une quelconque des revendications 1 à 5, **caractérisé en ce que** le premier capteur de mesure (13, 14) et/ou le deuxième capteur de mesure (13, 14) est/sont conçu(s) pour la détection d'une propriété ferromagnétique.

7. Appareil de mesure de température (3) selon l'une quelconque des revendications 1 à 6, **caractérisé en ce que** le premier capteur de mesure (13, 14) et/ou le deuxième capteur de mesure (13, 14) est conçu sous la forme d'un détecteur de champ magnétique de préférence précontraint.

8. Appareil de mesure de température (3) selon l'une quelconque des revendications 1 à 7, **caractérisé en ce qu'**un moyen (19) pour le raccordement correctement orienté du ou d'un connecteur de raccordement (7) du thermocouple (2) est formé sur le ou un logement de connecteur (8).

9. Kit de mesure de température (1) avec au moins un thermocouple (2), qui est fabriqué avec deux métaux différents assemblés l'un à l'autre en un point de mesure (4) du thermocouple (2), dans lequel le thermocouple (2) présente au moins deux éléments de contact (9, 10) formant un point de comparaison (6) pour la mesure de température, et avec un appareil de mesure de température (3) pour l'exploitation du thermocouple (2), **caractérisé en ce que** l'appareil de mesure de température (3) est réalisé selon l'une quelconque des revendications précédentes.

10. Procédé de configuration d'un appareil de mesure de température (3) pouvant fonctionner avec un thermocouple (2), **caractérisé en ce que** l'on contrôle ou on mesure une propriété magnétique d'un élément de contact (9, 10) du thermocouple (2) après un raccordement du thermocouple (2) à l'appareil de mesure de température (3) et **en ce que** l'on fournit automatiquement une information spécifique et/ou une courbe caractéristique du thermocouple raccordé (2) en fonction d'un résultat du contrôle ou de la mesure de la propriété magnétique.
